# EUROPÄISCHE PATENTSCHRIFT

(11) **EP 1 916 510 B1**
(45) Veröffentlichungstag und Bekanntmachung des Hinweises auf die Patenterteilung: **27.06.2018**
(21) Anmeldenummer: 07118304.0
(22) Anmeldetag: 11.10.2007
(51) Int. Cl.: G01N 3/12, G01M 3/10, G01M 3/32

(54) **Prüfvorrichtung zur Durchführung zyklischer hydraulischer Belastungsversuche in einem Extremtemperaturintervall an Druckbehältern aus Verbundwerkstoff**
Test device for performing cyclical hydraulic load tests in an extreme temperature interval in pressure containers made of composite material
Dispositif de vérification pour l'exécution d'essais de charge hydraulique cyclique dans un intervalle de température extrême sur des récipients sous pression en matériau composite

(30) Priorität: 25.10.2006 DE 102006051167
(43) Veröffentlichungstag der Anmeldung: 30.04.2008
(73) Patentinhaber: BAM Bundesanstalt für Materialforschung und -prüfung, 12205 Berlin (DE)
(72) Erfinder: MAIR, Dr.-Ing. Georg W., 14979, Großbeeren (DE)
(74) Vertreter: Zimmermann & Partner Patentanwälte mbB

(56) Entgegenhaltungen:
- EP-A- 0 096 887
- DE-A1- 2 216 746
- DE-A1- 3 620 345
- US-A- 5 269 370

## Beschreibung

Die Erfindung betrifft eine Prüfvorrichtung zur Durchführung zyklischer hydraulischer Belastungsversuche in einem Extremtemperaturintervall an Druckbehältern aus Verbundwerkstoff.

### Technologischer Hintergrund und Stand der Technik

Druckbehälter zur Speicherung von Gasen unter Innendruck werden herkömmlich aus Metall, zum Beispiel Stahl, gefertigt. Um eine ausreichende Sicherheit gegen Versagen bzw. für eine dauerhafte Dichtigkeit zu erzielen, sind - je nach Wahl des metallischen Werkstoffs und Auslegung der Druckbehälter - bestimmte Performance-Tests durchzuführen. Ein Nachteil rein metallischer Druckbehälter ist dabei ein auf das Gewicht bezogener relativ geringer Speicherwirkungsgrad (Performance Faktor).

Eine wesentliche Gewichtsreduzierung bei zumindest vergleichbarer Funktionalität kann erreicht werden, wenn der Druckbehälter nicht allein aus Metall, sondern teilweise oder ganz aus Verbundwerkstoff gefertigt ist. Derartige Druckbehälter müssen natürlich den Grundanforderungen sicher genügen, also dicht sein und den Betriebsbelastungen (wie dem Innendruck) standhalten. Druckbehälter des sogenannten Typs III wie auch des Typs II beinhalten einen metallischen Liner, der im Wesentlichen die Dichtfunktion und teilweise eine mittragende Funktion übernimmt. Zur Gewährung ausreichender mechanischer Integrität dient ein Faserverbundwerkstoff (Laminat), zum Beispiel aus Epoxidharz getränkte und gewickelte Faserstränge (Rowings) oder auch Tapes mit Thermoplastmatrix u. a., die zur Vollumwicklung beim Typ III und zur Umfangsumwicklung beim Typ II genutzt werden. Zumeist werden als Faserkomponente Kohlenstofffasern eingesetzt. Sie besitzen nur ein Viertel der Dichte von Stahl und haben etwa die dreifache statische Zugfestigkeit von normalem Stahl für nahtlose Flaschen. Die Kohlenstofffaser ist zudem nur sehr gering ermüdungsanfällig. Alternativ sind Aramidfasern, Glasfasern und zukünftig auch neue Fasern (wie z. B. Basaltfasern) oder Hybridverbunde aus mehreren Fasertypen verwendbar. Der Liner bildet bei diesen Behältertypen eine Art Grundgerüst und kann aus verschiedenen Werkstoffen gefertigt sein, wie zum Beispiel Stahl, Aluminium oder auch Thermoplast (Druckbehälter Typ IV). Der Vorteil von Druckbehältern aus Verbundwerkstoffen liegt vornehmlich in der Gewichtsreduzierung, die verglichen mit Druckbehältern aus Stahl bei gleicher Füllung bis zu 70 % betragen kann. Derartige Druckbehälter werden beispielsweise bei Rettungskräften, Feuerwehren und in medizinischen Bereichen eingesetzt. Andere Verwendungsgebiete liegen in der Luft- und Raumfahrt, im Gefahrguttransport und in der Fahrzeugtechnik als Erdgas- oder Wasserstoffspeicher.

Das Befüllen wie auch der Transport von Druckbehältern ist auf Grund ihres hohen Gefährdungspotentials mit einem generellen Verbot mit Erlaubnisvorbehalt belegt. Die Erlaubnis kann nach Erfüllung relevanter Rechtsvorschriften erteilt werden. Fester Bestandteil von Zulassungs-/Zertifizierungsprüfungen an Baumustern sind auch die so genannten Extremtemperatur-Lastwechselversuche. Diese umfassen hydraulische Belastungen des Druckgefäßes bei unter -40 °C und über 85 °C in einem zyklischen Prüfungsrhythmus. Die Gestaltung der Prüfanlagen ist den Anlagenherstellern überlassen.

Die Voraussetzungen zur Zulassung beinhalten neben diesen Baumusterprüfungen auch die Druckprobe an jedem Einzelbehälter mit Dichtigkeitsprüfung. Für die zuvor genannten Anwendungen ist keine Stichproben-Druckprüfung zulässig. Hinzu kommen verschiedene, auch zerstörende Prüfungen an Stichproben jeden Fertigungsloses.

Während die Druckgefäße nach den in den Rechtsvorschriften für den Gefahrguttransport herangezogenen Normen ([1] DIN EN 12245 Norm, 2002-09 Ortsbewegliche Gasflaschen - Vollumwickelte Flaschen aus Verbundwerkstoffen; Deutsche Fassung EN 12245:2002; [2] DIN EN 12257 Norm , 2002-09 Ortsbewegliche Gasflaschen - Nahtlose umfangsgewickelte Flaschen aus Verbundwerkstoffen; Deutsche Fassung EN 12257:2002; [3] ISO 11119-1 Norm , 2002-05 Gasflaschen aus Verbundwerkstoffen - Festlegungen und Prüfverfahren - Teil 1: Umfangsgewickelte Gasflaschen aus Verbundwerkstoffen; [4] ISO 11119-2 Norm, 2002-05 Gasflaschen aus Verbundwerkstoffen - Festlegungen und Prüfverfahren - Teil 2: Vollumwickelte, faserverstärkte Gasflaschen aus Verbundwerkstoffen mit lasttragenden metallischen Linern; [5] ISO 11119-3 Norm , 2002-09 Gasflaschen aus Verbundwerkstoffen - Festlegungen und Prüfverfahren - Teil 3: Volumenumwickelte, faserverstärkte Gasflaschen aus Verbundwerkstoffen mit nichtmetallischen Linern und nicht-lasttragenden Linern; [6] DIN EN ISO 11439 Norm , 2001-06 Gasflaschen - Gasflaschen zur Mitführung von verdichtetem Erdgas als Treibstoff für Kraftfahrzeuge (ISO 11439:2000); Deutsche Fassung EN ISO 11439:2000]) auf die Prüftemperaturen in einer Klimakammer herunter gekühlt und dann ohne weitere Temperaturanforderungen für das Druckmedium zykliert werden, gibt es in den neueren Regelungen zur Komponentenprüfung in Fahrzeugen (s. z. B. [7] ECE Regulation No. 110 Original version of the Regulation - Date of entry into force: 28 December 2000; Corrigendum 1 to the original version of the Regulation subject of Depositary; Notification C.N.141.2001.TREATIES-2 dated 14 March; [8] Proposal for a new draft Regulation "Uniform Provisions Concerning the Approval of [...] Vehicles Using Compressed Hydrogen [...]." of the GRPE Informal Group: Hydrogen/Fuel Cell Vehicles TRANS/WP.29/GRPE/2004/3 31st October 2003) höhere Anforderungen. In diesen Regelungen wird gefordert, dass die Medientemperatur während der Prüfung direkt gemessen werden muss und die Temperatur des Druckmediums konstant gehalten werden muss. Dies ist besonders wichtig für die Reproduzierbarkeit von Versuchsergebnissen.

Mit dem Beginn der Prüfung kommt es in herkömmlichen Anlagen jedoch auch bei optimaler Vortemperierung der Klimakammer zu einer sehr schellen Erwärmung des Druckmediums und auch des Prüflings. Die Erklärung hierfür ist eindeutig in der Flüssigkeitssäule zu sehen, die mit Beginn der Prüfung aus der Hydraulikanlage in den Prüfling geschoben wird. Dort vermischt sich das warme Druckmedium der zur Belastungsaufbringung erforderlichen Flüssigkeitssäule mit dem temperierten Inhalt des Prüflings. Dieses Volumen befindet sich je nach Größe des Prüflings und Funktionsweise/Größe der Anlage in der Leitung, im Druckübersetzer oder in dem zentralen Vorratsbehälter. Diese Bereiche befinden sich außerhalb der Prüfkammer und werden deshalb nicht mitgekühlt. Da es sich bei den in diesem Druck-/Temperaturniveau zu prüfenden Behälter ausschließlich um Composite-Behälter handelt, ist es auch bei extrem leistungsfähigen Klimaanlagen nicht möglich, den Prüfling mit dem durchmischten Druckmedium ausreichend schnell wieder auf die Solltemperatur zu bringen. Die Composite-Armierung wirkt wie eine thermische Isolierung, die es verhindert, dass die Behälteroberfläche eine ausreichenden Wärmeübergang aufweist. Daraus erwächst für Prüfungen mit hoher Reproduzierbarkeit, wie z. B. nach den Regelungen für Treibgasspeicher, die Notwendigkeit, das Volumen an Prüfmedium, das zur Aufbringung des Maximaldruckes erforderlich ist, vor Beginn der Belastung mit herunterzukühlen oder im anderen Fall mit zu erhitzen.

Der einfachste Ansatz zur Temperierung des notwendigen Volumens durch Unterbringung eines zusätzlichen Medienpufferbehälters in der Prüfkammer zu sorgen, hat zwei kritisch zu sehende Aspekte. Zum einen ist in dem relevanten Druckniveau bis etwa 1000 bar der Aufwand zur Installation eines zusätzlichen dauerfesten Druckbehälters enorm. Zum andern durchmischt sich auch in diesem Pufferbehälter das vorgekühlte Druckmedium mit dem warmen Druckmedium aus der Leitung sehr schnell. Dies hätte zur Folge, dass auch hier ein Anstieg der Temperatur zu verzeichnen wäre und gleichzeitig das durchmischte kalte Druckmedium in sehr großen Mengen in die Anlage zurückströmt. Dies führt bei den meisten Anlagen zu technischen Problemen z. B. mit den Dichtungen des Druckübersetzers, mit Schläuchen oder den Servoventilen. Somit ist die Aufgabe zu lösen, wie Neuanlagen gebaut werden können bzw. bestehende Anlagen derart aufgerüstet werden können, um die Durchmischung des vorgekühlten Druckmediums im Prüfling mit dem nicht vorgekühlten Druckmedium in den Druckleitungen auf ein Minimum zu reduzieren. Hierzu muss das Prüfmedium vor Beginn der Prüfung im benötigten Volumenumfang auf die Prüftemperatur gebracht werden und als zyklierende Flüssigkeitssäule außerhalb des Prüflings pulsieren können.

Diese Aufgabe wird erfindungsgemäß mit der Prüfvorrichtung zur Durchführung zyklischer hydraulischer Belastungsversuche in einem Extremtemperaturintervall an Druckbehältern aus Verbundwerkstoff nach Anspruch 1 gelöst. Die Prüfvorrichtung umfasst die Komponenten:
(a) eine Klimakammer, die zur Aufnahme eines zu prüfenden Druckbehälters und zur Regelung der Kammer- und Druckmedientemperatur im vorgegebenen Extremtemperaturintervall ausgelegt ist;
(b) eine Prüfanlage, die zur zyklisch-hydraulischen Beaufschlagung des Druckbehälters mit einem Druckmedium unter einem vorgebbaren Prüfdruck ausgelegt ist; und
(c) eine zum Anschluss an die Prüfanlage und den Druckbehälter ausgelegte Kühlstrecke, die aus einer oder mehreren miteinander für das Druckmedium leitend verbundenen Hochdruck-Rohrleitungen besteht, wobei Lage, Anzahl, Länge und Querschnitt der Hochdruck-Rohrleitungen so vorgegeben ist, dass ein inneres Gesamtvolumen eines innerhalb der Klimakammer angeordneten Teils der Kühlstrecke so ausgelegt ist, dass ein Volumen des sich innerhalb der Klimakammer angeordneten Teils der Kühlstrecke befindlichen Druckmediums mindestens dem Volumen an Druckmedium entspricht, das beim höchsten beaufschlagten Prüfdruck aus der Prüfanlage in die Kühlstrecke nachströmt.

Der Erfindung liegt der Gedanke zugrunde, ein für die Zwecke ausreichendes Volumen nach dem Konstruktionsprinzip einer Kühlstrecke innerhalb der Klimakammer bereitzustellen. Das sich in diesem Bereich der Kühlstrecke befindliche Druckmedium ist je nach Gestaltung der Kühlstreckenoberfläche über die Klimakammer in kurzer Zeit temperierbar. Der Ansatz ermöglicht es auch, die Temperatur des Druckmediums während der Prüfung von Druckgefäßen oder Treibgasspeicher bei entsprechend installierter Kühlleistung und evtl. zum nach Gestaltung der Kühlstreckenoberfläche über die Klimakammer in kurzer Zeit temperierbar. Der Ansatz ermöglicht es auch, die Temperatur des Druckmediums während der Prüfung von Druckgefäßen oder Treibgasspeicher bei entsprechend installierter Kühlleistung und evtl. zum Wärmeübergang vergrößerter Oberfläche der zugehörigen Klimakammer konstant zu halten. Sollte trotz einer angemessenen Flächenvergrößerung - vorzugsweise an der Prüfling zugewandten Seite - die Temperierungsleistung der Klimakammer nicht ausreichen, kann die Kühlstrecke anstelle von oder ergänzend zur Flächenvergrößerung mit einer zusätzlichen Flüssigkeitskühlung ausgerüstet werden. Hierbei wird durch ein separates Aggregat eine zur installierten Leistung zur Klimatisierung der Prüfkammer zusätzliche Klimaleistung in das System eingebracht. Vorzugsweise ist also die Hochdruckleitung mit Elementen zur Oberflächenvergrößerung zum Zweck des besseren Temperaturüberganges oder mit einer direkt kühlflüssigkeitsbetriebenen Manschette versehen.

Dabei muss ein Volumen des sich innerhalb der Klimakammer angeordneten Teils der Kühlstrecke befindlichen Druckmediums zumindest gleich oder größer sein als das Volumen an Druckmedium, das beim höchsten beaufschlagten Prüfdruck aus der Prüfanlage in die Kühlstrecke nachströmt, um zu verhindern, dass nicht ausreichend temperiertes Druckmedium in den zu prüfenden Druckgasbehälter strömt. Das Volumen an Druckmedium, das beim höchsten beaufschlagten Prüfdruck aus der Prüfanlage in die Kühlstrecke nachströmt, hängt von dem maximalen Prüfdruck, dem Volumen und der Dehnsteifigkeit des zu prüfenden Druckbehälters ab. Werden dem Fachmann diese drei Größen vorgegeben, so kann er zur Ermittlung des Volumens des innerhalb der Klimakammer angeordneten Teils der Kühlstrecke wie folgt vorgehen:
Das erforderliche geometrische Volumen der Kühlstrecke ist mindestens der maximale Prüfdruck multipliziert mit dem Produkt aus dem geometrischen Volumens des größten zu prüfenden Prüflings und der minimal anzunehmenden Drucksteifigkeit ergänzt um die Verlustvolumina aus z. B. der Medienkompression und der Nachgiebigkeit der Kühlstrecke.

Unter Druckbehältern im Sinne der Erfindung werden in erster Linie Druckgefäße und Treibgasspeicher, die unter Verwendung von Verbundwerkstoffen/Compositen (Typ II bis Typ III) oder unter ausschließlicher Verwendung von Verbundwerkstoffen (Typ IV) gestaltet sind verstanden.

Vorzugsweise ist die Kühlstrecke auf ein zum reversiblen Einschub in die Kühlkammer ausgelegtes Gestell montiert, so dass die Kühlstrecke in herkömmlichen Prüfvorrichtungen auf die einzelne Prüfaufgabe angepasst fallweise angewendet werden kann. Das die Kühlstrecke enthaltende Gestell wird gesondert beansprucht.

Die Kühlstrecke kann mehrere parallel angeordnete Hochdruck-Rohrleitungen mit gleicher Länge umfassen, die - gegebenenfalls inklusive des Gestells - so zu montieren sind, dass die Konstruktion in der Klimakammer der Prüfvorrichtung Platz findet.

Vorzugsweise ist die Kühlstrecke zur fallweisen Anwendung und einfachen Montage und Demontage an einem Übergang zur Prüfanlage und zum Druckbehälter mit zentralen Hochdruckadaptern versehen. Die Hochdruck-Rohrleitung ist vorzugsweise am Übergang zur Prüfanlage und zum Druckbehälter mit Hochdruckadaptern versehen, die sich als männlich/weiblich gegenüberstehen und es erlauben, die hier beschriebene Kühlstrecke ohne weitere Montagearbeiten in der Klimakammer ein- und auszubauen bzw. zwischen Druckbehälter und Prüfanlage zwischenzuschalten. Die Adaption der zu prüfenden Treibgasspeicher oder auch anderer Druckgefäße erfolgt am besten über eine Verbindung, die keine Drehung der Leitung bzw. des Prüflings erfordert.

Vorzugsweise ist die Kühlstrecke in die Klimakammer dauerhaft integriert und zum Prüfling hin mit einem Hochdruckadapter versehen.

Vorzugsweise werden Flanschverbindungen mit einem drehbaren Flanschring verwendet, um eine Verbindung einfach und zuverlässig mit wenig Zeitaufwand und ohne Drehung des Prüflings bis zum maximalen Prüfdruck der Anlage sicherzustellen.

Das Volumen der Rohrleitungen im Rahmengestell muss bezüglich Lage, Anzahl, Länge und Querschnitt auf das erforderlich Gesamtvolumen an Druckmedium für die Durchführung der Prüfung abgestimmt sein. Die Abstimmung erfolgt derart, dass auch bei dem höchsten Druck der Flüssigkeitssäule das von der Prüfanlage zum Ausgleich in die innerhalb der Klimakammer befindlichen Hochdruck-Rohrleitungen nachströmende Druckmedium nicht in den zu prüfenden Druckbehälter gelangt. Mit anderen Worten, das Volumen innerhalb der Kühlstrecke muss gleich oder größer als das aus der Prüfanlage nachströmende Volumen sein. Vorzugsweise wird dabei das erforderliche Volumen des betreffenden Teils der Kühlstrecke mit einer möglichst langen Leitung oder einer Vielzahl von Einzelleitungen mit möglichst geringem Querschnitt der Einzelleitungen vorgegeben, um die maximal mögliche Prüfgeschwindigkeit über die verschiedenen Temperatur- und Druckbereiche hoch zu halten. Hierbei ist der Leistungsverlust durch die Rohrreibung, die Elastizität der Rohrleitung und das größere Kompressionsvolumen zu beachten.

Der lichte Querschnitt der Hochdruck-Rohrleitungen hat die gegenläufigen Anforderungen bzgl. Strömungsverlusten und geometrischem Gesamtvolumen auf der einen und dem Temperaturübergang in das Prüfmedium und die höhere Durchmischung in großen Querschnitten zu berücksichtigen. Nach heutigem Stand der Fertigung von Stahlrohren liegt der lichte Querschnitt der Hochdruck-Rohrleitungen bei 2 bis 50 mm, vorzugsweise im Bereich von etwa 15 mm ± 10 mm.

Insbesondere, wenn die Kühlstrecke in der ganzen erforderlichen Arbeitslänge mittels fügefreier Rohrstrecken ausgeführt werden kann, kann die Durchmischung des temperierten und des nicht temperierten Prüfmediums zusätzlich durch Medientrenner wie Metallkolben, Kunststoffpfropfen, Bälle o. ä. reduziert werden. In diesem Fall - der insbesondere für Neuanlagen realisierbar sein dürfte - sollten vorzugsweise im Bereich der Endpositionen der Medientrenner Überströmeinrichtungen (z. B. Beipässe) integriert werden.

Die Erfindung wird nachfolgend in Ausführungsbeispielen anhand der zugehörigen Zeichnungen näher erläutert. Es zeigen:
- Figuren 1 und 2: verschiedene Perspektiven in 3D-Ansicht einer beispielhaften Ausführung der erfindungsgemäßen Prüfvorrichtung mit Kühlstrecke; und
- Figur 3: einen Ausschnitt aus einer Kühlstrecke mit Medientrenner und Überströmeinrichtung.

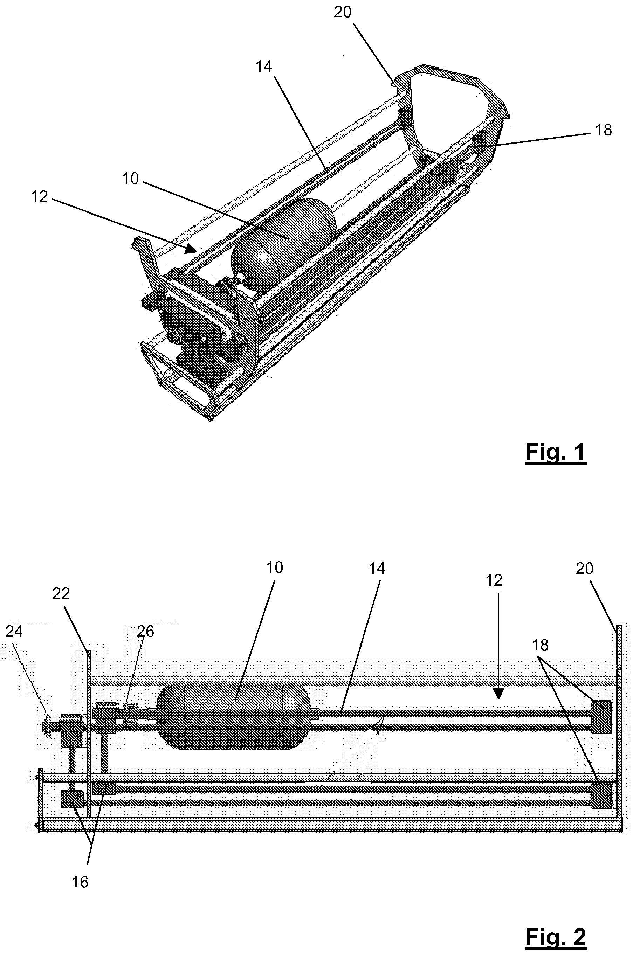

Die Figuren 1 und 2 zeigen in zwei verschiedenen 3D-Perspektivansichten eine beispielhafte Ausführungsform des erfindungsgemäß variierten Teils der Prüfvorrichtung. Die Prüfvorrichtung umfasst eine - hier nicht dargestellte - Prüfanlage, mit der ein Druckbehälter 10 über die Kühlstrecke 12 mit einem Druckmedium hydraulisch beaufschlagt werden kann. Der Druckbehälter 10 besteht ganz oder in Teilen aus einem Verbundwerkstoff.

Die beispielhaft dargestellte Kühlstrecke 12 umfasst vorliegend insgesamt vier (aufrüstbar bis auf sechs) parallel angeordnete Hochdruck-Rohrleitungen 14 (Rohrleitungsschleifen), deren Innendurchmesser etwa 14 mm beträgt und die für Drücke von bis zu 1200 bar ausgelegt sind. Die einzelnen Hochdruck-Rohrleitungen 14 der Kühlstrecke 12 sind über 90° Winkelstücke 16 und 180° Eckblöcke 18 miteinander zu parallelen Schleifen und für das Prüfmedium leitend verbunden.

Die Kühlstrecke 12 ist wiederum in ein Gestell 20 montiert, dessen Dimensionierung so vorgegeben ist, dass es in eine - hier nicht dargestellte - Klimakammer mit Längsprofilen der Prüfvorrichtung einschiebbar ist. An einer Stirnseite des Gestells 20 schließt eine Wandung 22 den Bereich des Gestells 20 ab, der sich während der Messung im Innern der Klimakammer befindet und in dem der Druckbehälter 10 während der Messung liegt. Die Kühlstrecke 12 ist weiterhin an einem Übergang zur Prüfanlage mit einem Hochdruckadapter 24 und an einem Übergang zum Druckbehälter 10 mit einem Hochdruckadapter 26 versehen. Bestandteil jedes der Hochdruckadapter ist ein Block zur Zusammenführung der parallelen Rohrleitungsschleifen auf einen Querschnitt an jedem Rohrschleifenende.

Vorzugsweise werden Messsensoren zur Protokollierung und auch Steuerung der gesamten Anlage von Druck und Temperatur des Prüfmediums in den Hochdruckadapter (26) und für Temperatur auch in (24) integriert.

Der sich bei der Messung im Innern der Klimakammer befindliche Teil der Kühlstrecke 12 ist nun so ausgelegt, dass sein Volumen mindestens einem Volumen entspricht, das bei Beaufschlagung mit dem maximalen Prüfdruck von Seiten der Prüfanlage in das Volumen des Prüflings 10 zzgl. des Verlustvolumens durch die Kühlstrecke 12 gedrückt wird.

Vorliegend beträgt der maximal aufgebrachte Prüfdruck 1200 bar und ein unter diesem Druck in die vorliegende Kühlstrecke aus der Prüfanlage nachströmendes Volumen von maximal etwa 3 Liter. Entsprechend beträgt hier bei vier parallelen Rohrschleifen das innere geometrische Volumen des sich innerhalb der Klimakammer befindlichen Teils der Kühlstrecke etwa 3,5 Liter.

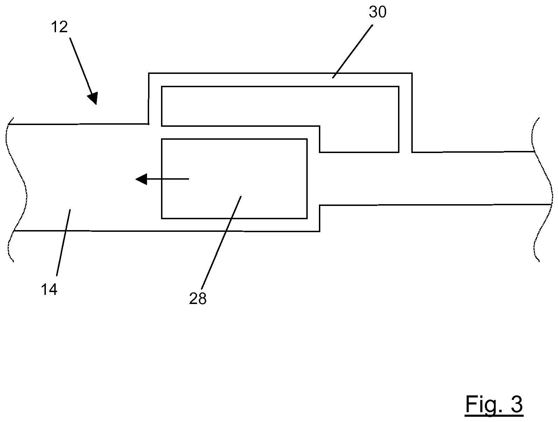

Der Figur 3 ist ein Ausschnitt aus einer Kühlstrecke 12 im Bereich eines optional angeordneten Medientrenners 28 und Überströmeinrichtung 30 - hier als Beipass ausgeformt - zu entnehmen.

### BEZUGSZEICHENLISTE

- 10: Druckbehälter
- 12: Kühlstrecke
- 14: Rohrleitungen
- 16: Winkelstücke
- 18: Eckblöcke
- 20: Gestell
- 22: Wandung
- 24: Hochdruckadapter
- 26: Hochdruckadapter
- 28: Medientrenner
- 30: Überströmvorrichtung

## Patentansprüche

1. Prüfvorrichtung zur Durchführung zyklischer hydraulischer Belastungsversuche bei Temperaturen von unter -40° und über 85° Celsius an Druckbehältern aus Verbundwerkstoff, umfassend die Komponenten:
(a) eine Klimakammer, die zur Aufnahme eines zu prüfenden Druckbehälters (10) und zur Regelung der Kammer- und Druckmedientemperatur im vorgegebenen Extremtemperaturintervall ausgelegt ist;
(b) eine Prüfanlage, die zur zyklisch-hydraulischen Beaufschlagung des Druckbehälters (10) mit einem Druckmedium unter einem vorgebbaren Prüfdruck ausgelegt ist; und
(c) eine zum Anschluss an die Prüfanlage und den Druckbehälter (10) ausgelegte Kühlstrecke (12), die aus einer oder mehreren miteinander für das Druckmedium leitend verbundenen Hochdruck-Rohrleitungen (14) besteht, wobei Lage, Anzahl, Länge und Querschnitt der Hochdruck-Rohrleitungen (14) so vorgegeben ist, dass ein Volumen des sich innerhalb der Klimakammer angeordneten Teils der Kühlstrecke (12) befindlichen Druckmediums mindestens dem Volumen an Druckmedium entspricht, das beim höchsten beaufschlagten Prüfdruck aus der Prüfanlage in die Kühlstrecke (12) nachströmt.

2. Prüfvorrichtung nach Anspruch 1, bei der die Kühlstrecke (12) zur fallweisen Anwendung und einfachen Montage und Demontage an einem Übergang zur Prüfanlage und zum Druckbehälter (10) mit zentralen Hochdruckadaptern (24, 26) versehen ist.

3. Prüfvorrichtung nach Anspruch 1, bei der die Kühlstrecke (12) in die Klimakammer dauerhaft integriert ist und zum Prüfling hin mit einem Hochdruckadapter (26) versehen ist.

4. Prüfvorrichtung nach Anspruch 1, bei der der lichte Querschnitt der Hochdruck-Rohrleitungen (14) im Bereich von 15 mm 10 mm liegt.

5. Prüfvorrichtung nach Anspruch 1, bei der die Hochdruckleitung (14) mit Elementen zur Oberflächenvergrösserung zum Zweck des besseren Temperaturüberganges oder mit einer direkt kühlflüssigkeitsbetriebenen Manschette versehen ist.

6. Prüfvorrichtung nach Anspruch 1, bei der in die Hochdruck-Rohrleitung (14) ein oder mehrere bewegliche Medientrenner (28) eingebaut sind.

7. Prüfvorrichtung nach Anspruch 6, bei der im Bereich der Endposition des Medientrenners (28) eine Überstromeinrichtung (30) vorhanden ist.

8. Prüfvorrichtung nach einem der vorhergehenden Ansprüche, bei der die Kühlstrecke (12) auf ein zum reversiblen Einschub in die Kühlkammer ausgelegtes Gestell (20) montiert ist.

## Claims

1. A test device for performing cyclical hydraulic load tests at temperatures below -40 °C and above 85 °C in pressure containers made of composite material, comprising the components:
(a) a climatic chamber configured for receiving a pressure container to be tested (10) and for controlling the chamber temperature and the pressure medium temperature in the determined extreme temperature interval;
(b) a test facility configured for cyclical-hydraulically loading the pressure container (10) with a pressure medium having a determined test pressure; and
(c) a cooling section (12) configured for being connected to the test facility and the pressure container (10), which consists of one or a plurality of high pressure pipelines (14) connected together so as to conduct the pressure medium , wherein the location, number, length and cross-section of the high-pressure pipelines (14) are specified such that a volume of the pressure medium located in the part of the cooling section (12) arranged within the climatic chamber corresponds at least to the volume of the pressure medium that, at the highest test pressure applied, flows from the test facility into the cooling section (12).

2. The test device according to claim 1, wherein the cooling section (12) is provided with central high-pressure adapters (24, 26) at points of transition to the test facility and the pressure container (10) for case-by-case application and ease of assembly and disassembly.

3. The test device according to claim 1, wherein the cooling section (12) is permanently integrated into the climatic chamber, and is provided with a high-pressure adapter (26) to the test specimen.

4. The test device according to claim 1, wherein the clear cross-section of the high-pressure pipelines (14) is in the range of 15 mm ± 10 mm.

5. The test device according to claim 1, wherein the high-pressure line (14) is provided with elements for surface enlargement for purposes of improved temperature transfer, or with a directly coolant-operated collar.

6. The test device according to claim 1, wherein one or a plurality of movable media separators (28) are installed in the high-pressure pipeline (14).

7. The test device according to claim 6, wherein an overflow device (30) is present in the region of the end position of the media separator (28).

8. The test device according to one of the preceding claims, wherein the cooling section (12) is mounted on a frame (20) designed for reversible insertion into the cooling chamber.

## Revendications

1. Dispositif de vérification pour l'exécution d'essais de charge hydraulique cyclique à des températures inférieures à -40° et supérieures à 85° Celsius sur des récipients sous pression en matériau composite, comprenant les composants :
(a) une chambre climatique destinée à accueillir un récipient sous pression (10) à contrôler et destinée à réguler la température de la chambre et des fluides de pression dans un intervalle de température extrême prédéfini ;
(b) une installation de vérification destinée à soumettre de manière hydraulique et cyclique le récipient sous pression (10) à un fluide de pression sous une pression de vérification pouvant être prédéfinie ; et
(c) une section de refroidissement (12) destinée à être raccordée à l'installation de vérification et au récipient sous pression (10), constituée d'une ou de plusieurs conduites tubulaires de haute pression (14) raccordées les unes aux autres pour guider le fluide de pression, dans lequel la position, le nombre, la longueur et la section transversale des conduites tubulaires de haute pression (14) sont prédéfinis de sorte qu'un volume du fluide de pression se trouvant dans la partie de la section de refroidissement (12) disposée à l'intérieur de la chambre climatique corresponde au moins au volume du fluide de pression s'écoulant dans la section de refroidissement (12) depuis l'installation de vérification quand on applique la pression de vérification maximale.

2. Dispositif de vérification selon la revendication 1, dans lequel la section de refroidissement (12) est dotée d'adaptateurs centraux de haute pression (24, 26) sur un passage menant à l'installation de vérification et au récipient sous pression (10) en vue d'une utilisation éventuelle et d'un montage et démontage simples.

3. Dispositif de vérification selon la revendication 1, dans lequel la section de refroidissement (12) est intégrée durablement dans la chambre climatique et est dotée d'un adaptateur de haute pression (26) en direction de l'éprouvette.

4. Dispositif de vérification selon la revendication 1, dans lequel la section intérieure des conduites tubulaires de haute pression (14) se situe dans la plage de 15 mm à 10 mm.

5. Dispositif de vérification selon la revendication 1, dans lequel la conduite de haute pression (14) est dotée d'éléments destinés à augmenter les surfaces dans le but d'améliorer la transition de température ou d'une chemise fonctionnant directement avec un liquide de refroidissement.

6. Dispositif de vérification selon la revendication 1, dans lequel un ou plusieurs séparateurs de fluides mobiles (28) sont intégrés à la conduite de haute pression (14).

7. Dispositif de vérification selon la revendication 6, dans lequel un système de trop plein (30) est présent dans la zone terminale du séparateur de fluides (28).

8. Dispositif de vérification selon l'une des revendications précédentes, dans lequel la section de refroidissement (12) est montée sur un châssis (20) destiné à l'insertion amovible dans la chambre de refroidissement.
